# EUROPÄISCHE PATENTSCHRIFT

(11) **EP 0 978 407 B1**
(45) Veröffentlichungstag und Bekanntmachung des Hinweises auf die Patenterteilung: **08.09.2004**
(21) Anmeldenummer: 99112000.7
(22) Anmeldetag: 30.06.1999
(51) Int. Cl.: B60K 31/04

(54) **Verfahren und Vorrichtung zur Auswahl und Anzeige von Geschwindigkeiten eines Fahrzeugs mit adaptiver Geschwindigkeitsregelung**
Method and device for setting and displaying of speeds of vehicles having an adaptive cruise control system
Procédé et dispositif de selection et affichage de valeurs de vitesse d'un véhicule avec un système de régulation de la vitesse adaptif

(30) Priorität: 06.08.1998 DE 19835566
(43) Veröffentlichungstag der Anmeldung: 09.02.2000
(73) Patentinhaber: Volkswagen Aktiengesellschaft, 38436 Wolfsburg (DE)
(72) Erfinder: Ruchatz, Thomas, Dipl.-Ing., 38165 Lehre (DE)

(56) Entgegenhaltungen:
- DE-A- 19 620 467
- DE-C- 19 646 104
- FR-A- 2 447 286
- WINNER ET AL: 'Adaptive Cruise Control System Aspects and Development Trends' SAE TRANSACTIONS Bd. 105, 1996, WARRENDALE, PA, US, Seiten 1412 - 1421, XP002124577

## Beschreibung

Die Erfindung betrifft ein Verfahren und eine Vorrichtung zum Auswählen und Anzeigen von Geschwindigkeiten bei der adaptiven Geschwindigkeitsregelung von Fahrzeugen.

Verfahren und Vorrichtungen zur Regelung der Geschwindigkeit von Fahrzeugen durch Beschleunigen oder Bremsen nach einem gesetzten Sollwert sind seit längerem bekannt. beispielsweise unter den Bezeichnungen "Tempomat" oder "cruise control". In letzter Zeit sind diese Verfahren derart weiterentwickelt worden, daß in die Geschwindigkeitsregelung auch in Fahrtrichtung befindliche stehende oder bewegte Hindernisse, beispielsweise vorausfahrende Fahrzeuge, einbezogen werden. Die Einhaltung des gesetzten Sollwertes erfolgt dann nur soweit die Verkehrslage dies ermöglicht. Man bezeichnet diesen Sollwert daher auch als "Wunschgeschwindigkeit". In dem Aufsatz "Adaptive Cruise Control System Aspects and Development Trends" von Winner et al., veröffentlicht auf der SAE 96 vom 26. bis 29. Februar 1996 in Detroit, sind ein solches Verfahren und eine Vorrichtung grundsätzlich beschrieben. Im deutschen Sprachraum sind dafür die Bezeichungen "adaptive" oder "dynamische" Fahrgeschwindigkeitsregelung gebräuchlich.

Beim "Tempomat" wird im allgemeinen die Fahrgeschwindigkeit vF auf einen konstanten Sollwert geregelt, der zu irgendeinem Zeitpunkt durch Übernahme der gerade aktuellen und am Tachometer angezeigten Geschwindigkeit gesetzt werden kann. Ähnlich kann auch bei der adaptiven Geschwindigkeitsregelung die aktuelle Geschwindigkeit vF zu einem beliebigen Zeitpunkt als Wunschgeschwindigkeit vset gesetzt werden. Da die tatsächliche Geschwindigkeit aber vom Regler während der Fahrt je nach Verkehrslage häufig auch unterhalb der Wunschgeschwindigkeit vset eingeregelt wird, kann der Fahrer diese nicht mehr am Tachometer erkennen. Es ist also eine unabhängige Anzeige der Wunschgeschwindigkeit erforderlich. Dies kann durch zusätzliche Mittel, beispielsweise Leuchtdiodenzeilen, im Bereich der Tachometerskala, wie in der FR 2 447 286 A1 beschrieben, oder durch eine zusätzliche Digitalanzeige bei digitalem Tachometer geschehen.

Die Messung der Fahrzeuggeschwindigkeit vF für die Regelung geschieht üblicherweise mittels bekannter Sensoren mit einem geringen Fehler. Aufgrund gesetzlicher Vorschriften darf die Anzeige jedoch keinen Minusfehler aufweisen, weshalb üblicherweise die Anzeigeinstrumente einen sog. Tachovorlauf Δv haben. Wenn daher bei freier Strecke die gesetzte Wunschgeschwindigkeit vset eingehalten und neben dem Tachometer angezeigt wird, dann wird die Tachometeranzeige vFA um den Tachovorlauf höher liegen als die angezeigte Wunschgeschwindigkeit. Dadurch erhält der Fahrer den Eindruck, daß das Fahrzeug zu schnell fährt und die Reqelung fehlerhaft arbeitet.

Die DE 196 46 104 C1 die den nächstkommenden den Stand der Technik bildet, schlägt vor, eine diskrete Folge anzuzeigender Wunschgeschwindigkeiten vorzusehen, zu denen der Tachovorlauf bekannt und die zugehörige aktuelle Geschwindigkeit vF in der Steuereinheit gespeichert ist. Wird die Regelung während der Fahrt eingeschaltet, dann wird dem Regler der der aktuellen Geschwindigkeit nächstkommende Wert als aktuelle Wunschgeschwindigkeit zugewiesen und die zugehörige anzuzeigende Wunschgeschwindigkeit vsetA, mit der dann die Tachoanzeige vFA bei freier Strecke übereinstimmt, angezeigt. Es ist aber nicht möglich, mit der bekannten Vorrichtung beliebige Wunschgeschwindigkeiten vset aus einer kontinuierlichen oder quasikontinuierlichen Reihe auszuwähten.

Die DE 196 46 104 C1 umfaßt hierbei eine Vorrichtung zur Auswahl und Anzeige der Fahrgeschwindigkeit eines von einem Fahrer gesteuerten Fahrzeugs in einer adaptiven Geschwindigkeitsregelung, umfassend
- Messung der aktuellen Geschwindigkeit,
- Anzeige der aktuellen Geschwindigkeit als anzuzeigende Geschwindigkeit mit einer positiven Tachometervoreilung (Δv) in einem ersten Anzeigeinstrument (Tachometer), und
- Anzeige einer anzuzeigenden Wunschgeschwindigkeit in einem zweiten
Anzeigeinstrument.

Aufgabe der Erfindung ist es, ein Verfahren und eine Vorrichtung zur Auswahl und Anzeige von Geschwindigkeiten bei der adaptiven Fahrgeschwindigkeitsregelung bereitzustellen, welche die Übernahme der aktuell gefahrenen Geschwindigkeit als Wunschgeschwindigkeit gestatten und auf einfache Weise so gestaltet werden können, daß dabei auf freier Strecke am Anzeigeinstrument übereinstimmende Werte der gefahrenen Geschwindigkeit vFA und der Wunschgeschwindigkeit vsetA angezeigt werden.

Diese Aufgabe wird gelöst durch ein Verfahren nach Anspruch 1 und eine vorrichtung nach Anspruch 3.

Während der Fahrt wird die aktuelle Geschwindigkeit des Fahrzeugs vF laufend gemessen und liegt im Regelsystem vor. In einem ersten Anzeigeinstrument wird die anzuzeigende

Geschwindigkeit vFA, die sich von der aktuellen Geschwindigkeit vF um einen positiven Tachovorlauf Δv unterscheidet, angezeigt. Zu einem bestimmten Zeitpunkt wird nun durch den Fahrer die Übernahme der aktuellen Geschwindigkeit vF als Wunschgeschwindigkeit vset in einen Speicher des Regelsystems veranlaßt (Setzen).

Erfindungsgemäß wird nun gleichzeitig die Berechnung einer anzuzeigenden Wunschgeschwindigkeit vsetA ausgelöst, die in dem dafür bestimmten zweiten Anzeigeinstrument angezeigt wird.

Die Berechnung der anzuzeigenden Wunschgeschwindigkeit vsetA geschieht durch Addition einer im Regelsystem gespeicherten Tachovoreilung Δv zur gemessenen aktuellen Geschwindigkeit vF. Der Tachovorlauf kann bei der Montage des Regelsystems und der Anzeigeinstrumente gespeichert werden, beispielsweise durch Einstellung einer oder mehrerer Geschwindigkeiten auf einem Prüfstand oder andere bekannte Applikationsmethoden.

Die durch Übernahme der aktuellen Geschwindigkeit gesetzte Wunschgeschwindigkeit vset kann auch vom Fahrer in bekannter Weise, beispielsweise durch Betätigung von Plus- oder Minustasten, verändert werden.

Die erfindungsgemäße Vorrichtung wird anhand eine Ausführungsbeispiels erläutert.

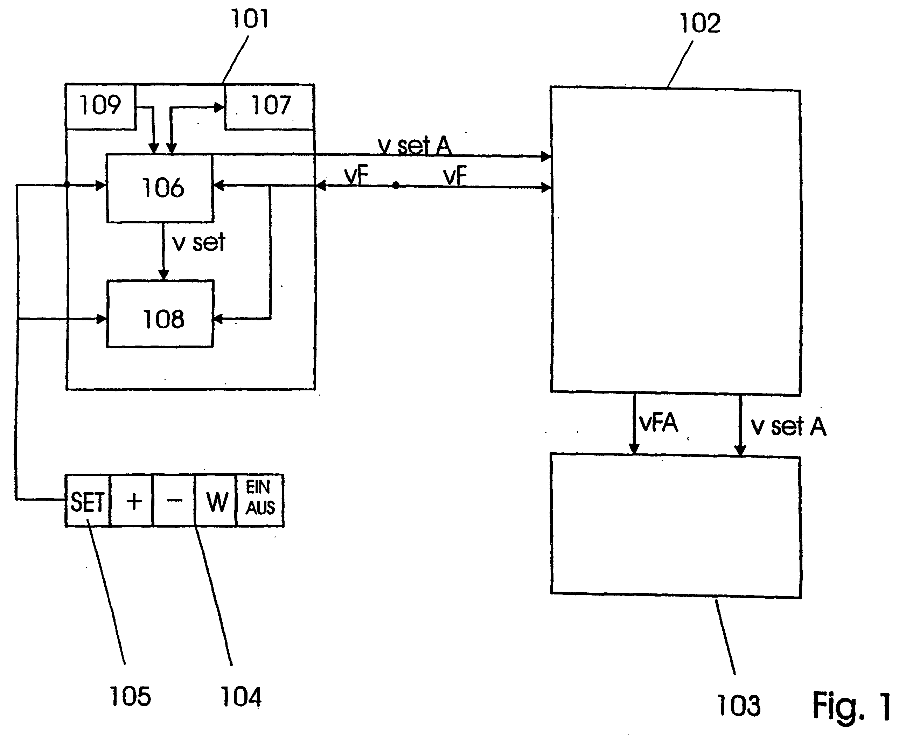

Es Zeigt
Fig. 1 ein Blockschaltbild einer erfindungsgemäßen Vorrichtung.

Die in Fig. 1 gezeigte Vorrichtung umfaßt eine Geschwindigkeitssteuereinheit 101, eine Anzeigesteuereinheit 102 und eine Anzeigeeinheit 103. Die aktuelle Fahrzeuggeschwindigkeit vF wird durch hier nicht gezeigte Sensoren gemessen und den Einheiten 101 und 102 zugeführt. Zur Geschwindigkeitssteuereinheit gehört ein Bedienelement 104 mit einer Set-Taste 105 sowie ggf weiteren Tasten für Funktionen wie Ein/Aus, Wiederaufnahme einer früheren Wunschgeschwindigkeit nach Wiedereinschalten, Plus/Minus zur Erhöhung bzw. Erniedrigung der Wunschgeschwindigkeit. Betätigung der Taste 105 veranlaßt den Rechner 106, die aktuelle Geschwindigkeit vF als Wunschgeschwindigkeit vset im Speicher 107 abzulegen und an den Regler 108 weiterzugeben. Dieser regelt die Fahrgeschwindigkeit vF nach der Wunschgeschwindigkeit vset und anderen Größen, deren Eingabe hier nicht gezeigt ist, beispielsweise der Relativgeschwindigkeit zu vorausliegenden Hindernissen. Außerdem berechnet der Rechner 106 aus der Wunschgeschwindigkeit vset mittels der im Speicher 109 abgelegten Daten, beispielsweise einem Summanden Δv oder einer Kennlinie, die anzuzeigende Wunschgeschwindigkeit vsetA und übermittelt diese an die Anzeigesteuereinheit 102. Die Anzeigesteuereinheit 102 veranlaßt die Anzeige der Fahrgeschwindigkeit vFA einschließlich des Tachovorlaufs sowie der anzuzeigenden Wunschgeschwindigkeit vsetA in der Anzeigeeinheit 103. Diese kann in bekannter Weise einen Zeigertachometer mit runder Skala als erstes und eine kreisbogenförmig neben der Skala befindliche quasikontinuierliche Lichtdiodenzeile als zweites Anzeigeinstrument umfassen. Die Anzeigeinstrumente können auch Digitalanzeigen sein.

## Patentansprüche

1. . Verfahren zur Auswahl und Anzeige der Fahrgeschwindigkeit eines von einem Fahrer gesteuerten Fahrzeugs in einem Verfahren der adaptiven Geschwindigkeitsregelung, umfassend
- Messung der aktuellen Geschwindigkeit (vF),
- Anzeige der aktuellen Geschwindigkeit (vF) als anzuzeigende Geschwindigkeit (vFA) mit einer positiven Tachometervoreilung (Δv) in einem ersten Anzeigeinstrument (Tachometer),
- Speichern der aktuellen Geschwindigkeit (vF) als aktuelle Wunschgeschwindigkeit (vset) für die adaptive Geschwindigkeitsregelung, wobei die anzuzeigende Wunschgeschwindigkeit (vsetA) aus der aktuellen Geschwindigkeit (vF) durch Addition einer gespeicherten Tachovoreilung (Δv) berechnet wird und in einem zweiten Anzeigeinstrument, augezeigt wird
.

2. Verfahren nach Anspruch 1, **dadurch gekennzeichnet, dass** zu einem von dem Fahrer bestimmten zeitpunkt die übernahme der aktuellen Geschwindigkeit (vF) als aktuelle Wunschgeschwindigkeit (vset) in den Speicher und die Berechnung einer anzuzeigenden Wunschgeschwindigkeit (vsetA) veraulasst wird.

3. Vorrichtung zur Auswahl und Anzeige der Fahrgeschwindigkeit eines von einem Fahrer gesteuerten Fahrzeugs, mit
- einer ersten Steuereinheit (101) zur Regelung der Fahrgeschwindigkeit und/oder einer Beschleunigung des Fahrzeugs, zumindest auf der Grundlage einer vom Fahrer gewählten Wunschgeschwindigkeit (vset) und der aktuellen Geschwindigkeit (vF),
- einer zweiten Steuereinheit (102) zur Steuerung einer Anzeige (103), mit der zumindest eine anzuzeigende Geschwindigkeit (vFA) und eine anzuzeigende Wunschgeschwindigkeit (vsetA) anzeigbar sind,
**dadurch gekennzeichnet, dass**
- die erste Steuereinheit (101) Mittel (106) zur Umrechnung der aktuellen Geschwindigkeit (vF) durch die Addition einer gespeicherten Tachovoreilung (Δv) in eine anzuzeigende Wunschgeschwindigkeit (vsetA) und zu deren Weiterleitung an die zweite Steuereinheit (102) umfasst.

## Claims

1. Method for selecting and displaying the travelling speed of a vehicle which is controlled by a driver, using a method for adaptive cruise control, comprising
- measurement of the current speed (vF),
- display of the current speed (vF) as a speed (vFA) to be displayed, with a positive speedometer advance (Δv) in a first display instrument (speedometer),
- storage of the current speed (vF) as a current desired speed (vset) for the adaptive cruise control, the desired speed (vsetA) which is to be displayed being calculated from the current speed (vF) by addition of a stored speedometer advance (Δv), and being displayed in a second display instrument.

2. Method according to Claim 1, **characterized in that**, at a time which is determined by the driver, the current speed (vF) is transferred into the memory as the current desired speed (vset), and the calculation of a desired speed (vsetA) which is to be displayed is brought about.

3. Device for selecting and displaying the travelling speed of a vehicle which is controlled by a driver, having
- a first control unit (101) for controlling the travelling speed and/or an acceleration of the vehicle, at least on the basis of a desired speed (vset) which is selected by the driver, and of the current speed (vF),
- a second control unit (102) for controlling a display (103) with which at least a speed (vFA) which is to be displayed and a desired speed (vsetA) which is to be displayed can be displayed,
**characterized in that**
- the first control unit (101) comprises means (106) for converting the current speed (vF) into a desired speed (vsetA) which is to be displayed, by adding a stored speedometer advance (Δv), and for passing on said desired speed (vsetA) to the second control unit (102).

## Revendications

1. Procédé de sélection et d'affichage de la vitesse de roulage d'un véhicule conduit par un conducteur, dans un procédé de régulation adaptative de la vitesse, lequel procédé de sélection et d'affichage comprend les étapes qui consistent à :
- mesurer la vitesse effective (vF),
- afficher la vitesse effective (vF) comme vitesse à afficher (vFA) avec une avance positive au tachymètre (Δv) sur un premier instrument d'affichage (tachymètre),
- conserver en mémoire la vitesse effective (vF) comme vitesse effective de consigne (vset) pour la régulation adaptative de la vitesse, la vitesse de consigne à afficher (vsetA) étant calculée à partir de la vitesse effective (vF) en y ajoutant une avance au tachymètre (Δv) conservée en mémoire et étant affichée sur un deuxième instrument d'affichage.

2. Procédé selon la revendication 1, **caractérisé en ce que** la reprise dans la mémoire de la vitesse effective (vF) utilisée comme vitesse effective de consigne (vset) et le calcul d'une vitesse de consigne à afficher (vsetA) sont lancés à un instant déterminé par le conducteur.

3. Dispositif de sélection et d'affichage de la vitesse de roulage d'un véhicule conduit par un conducteur, lequel dispositif comportant :
- une première unité de commande (101) qui régule la vitesse de roulage et/ou une accélération du véhicule au moins à partir d'une vitesse de consigne (vset) sélectionnée par le conducteur et de la vitesse effective (vF),
- une deuxième unité de commande (102) qui commande un affichage (103) qui permet d'afficher au moins une vitesse à afficher (vFA) et une vitesse de consigne à afficher (vsetA),
**caractérisé en ce que**
- la première unité de commande (101) comprend des moyens (106) qui convertissent la vitesse effective (vF) en une vitesse de consigne à afficher (vsetA) en y ajoutant une avance au tachymètre (Δv) pour la transmettre à la deuxième unité de commande (102).
